## Europäisches Patentamt
## European Patent Office
## Office européen des brevets

(19)

(11) Veröffentlichungsnummer: **0 029 981**
**B1**

(12)

# EUROPÄISCHE PATENTSCHRIFT

(45) Veröffentlichungstag der Patentschrift:
30.11.83

(51) Int. Cl.³: **B 23 C 5/22**

(21) Anmeldenummer: **80107301.6**

(22) Anmeldetag: **24.11.80**

---

(54) **Messerkopf zum Walzenfräsen.**

---

(30) Priorität: **03.12.79 DE 2948544**

(43) Veröffentlichungstag der Anmeldung:
**10.06.81 Patentblatt 81/23**

(45) Bekanntmachung des Hinweises auf die Patenterteilung:
**30.11.83 Patentblatt 83/48**

(84) Benannte Vertragsstaaten:
**FR GB IT SE**

(56) Entgegenhaltungen:
**CH - A - 90 759**
**CH - A - 93 622**
**DE - C - 132 984**
**FR - A - 1 351 187**
**FR - A - 1 534 559**
**US - A - 2 101 085**
**US - A - 2 357 088**
**US - A - 3 303 556**

(73) Patentinhaber: **Santrade Ltd., Alpenquai 12 P.O. Box 321, CH-6002 Luzern (CH)**

(72) Erfinder: **Wermeister, Günter, Schmiedestrasse 36, D-4030 Ratingen (DE)**
Erfinder: **Bellmann, Bernhard, Dr., Moselstrasse 7, D-6202 Pfungstadt (DE)**

(74) Vertreter: **Wangemann, Horst, Dipl.-Ing., Stresemannstrasse 28, D-4000 Düsseldorf (DE)**

---

Messerkopf zum Walzenfräsen

Die Erfindung bezieht sich auf einen Messerkopf zum Walzenfräsen mit durch Fliehkraft gegen Ausnehmungswände des Messerkopfkörpers anpreßbaren Schneidplatten, die in Ausnehmungen des Messerkopfkörpers mit radial nach außen gegeneinander gerichteten Wänden und mit schwalbenschwanzförmigem Querschnitt angeordnet und durch je ein Klemmstück gehalten sind, das jeweils an der der Freifläche der Schneidplatten gegenüberliegenden Schrägfläche anliegt.

Es sind Fräswerkzeuge für Schnittgeschwindigkeiten bis zu 5 km/min bekannt, bei denen die Schneidplatten leicht geklemmt in Taschen eingepaßt sind, um dort durch die Fliehkraft ihrer eigenen Masse radial festgepreßt zu werden. Industrieanzeiger, 94. Jg. Nr. 42, 1972, S. 973/74). — Durch die US-PS 2 101 085 ist ein Walzenfräser mit den Merkmalen des Gattungsteils des Hauptanspruches bekannt, bei dem die länglichen Schneidplatten durch ein axial verstellbares keilförmiges Klemmstück gehalten sind, das den Schneiddruck aufnimmt und zum Befestigen und zum Lösen erheblicher Kräfte bedarf.

Durch die US-PS 3 018 675 ist ferner eine Bohrstange mit in mehreren Radialebenen angeordneten Schneidplatten bekannt, von denen eine in einer dreieckförmigen, nach außen sich verjüngenden Ausnehmung gehalten ist, die abgeschrägte Seitenwände besitzt.

Diesen bekannten Vorrichtungen gegenüber liegt der Erfindung die Aufgabe zugrunde, ein in seinem Aufbau und seiner Benutzung einfaches Werkzeug zum Hochgeschwindigkeitswalzenfräsen zu schaffen, das trotz seiner Einfachheit Umdrehungszahlen von 50 000 bis 60 000 min$^{-1}$ zuläßt und bei dem eine genau definierte Stellung der Schneidplatte gewährleistet wird.

Zur Lösung dieser Aufgabe sieht die Erfindung bei einem Messerkopf der eingangs genannten Gattung die Merkmale des Kennzeichnungsteils des Hauptanspruchs vor. Der Weiterentwicklung und Verbesserung dieser Merkmale dienen die Merkmale der Unteransprüche.

Der Vorteil des Messerkopfes nach der Erfindung offenbart sich darin, daß durch die Seitenwände der sich nach außen verjüngenden und gegen den Boden sich verbreiternden Ausnehmung einerseits, andererseits durch die gegen die Rückfläche (Hauptschnittdruck-Abstützfläche) der Schneidplatte wirkende Schrägfläche des Klemmstückes die Schneidplatte auch bei noch so großen Fliehkräften in ihrer Lage gehalten wird, wobei mit wachsender Fliehkraft sowohl der Anpreßdruck der Schneidplatte gegen die Seitenwände der Ausnehmung des Messerkopfkörpers, wie auch gegen die in Radialebene des Messerkopfkörpers gelegene Stützwand, die den Boden der Ausnehmung bildet, angepreßt wird. Hierbei wachsen nicht nur die Anpreßkräfte mit zunehmender Drehzahl des Messerkopfes, vielmehr erhält auch die Schneidplatte einen genau definierten Sitz in dem Messerkopfkörper.

Auf der Zeichnung ist ein Ausführungsbeispiel des Messerkopfes nach der Erfindung dargestellt, und zwar zeigt

Fig. 1 eine Seitenansicht des Messerkopfes,

Fig. 2 einen Querschnitt durch den die Schneidplatten tragenden Abschnitt des Messerkopfes,

Fig. 3 eine Stirnansicht des Messerkopfes,

Fig. 4 einen Querschnitt durch den Messerkopfkörper,

Fig. 5 eine teilweise Seitenansicht des Messerkopfkörpers ohne Schneidplatten

Fig. 6 und 7 eine Draufsicht und Seitenansicht gegen eine Schneidplatte.

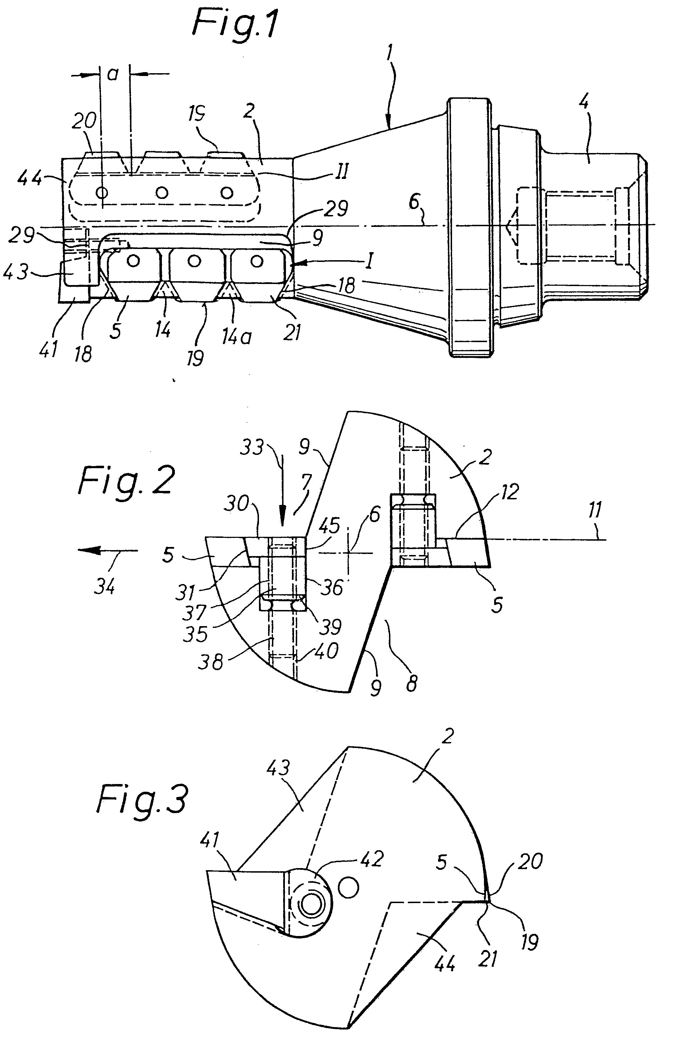

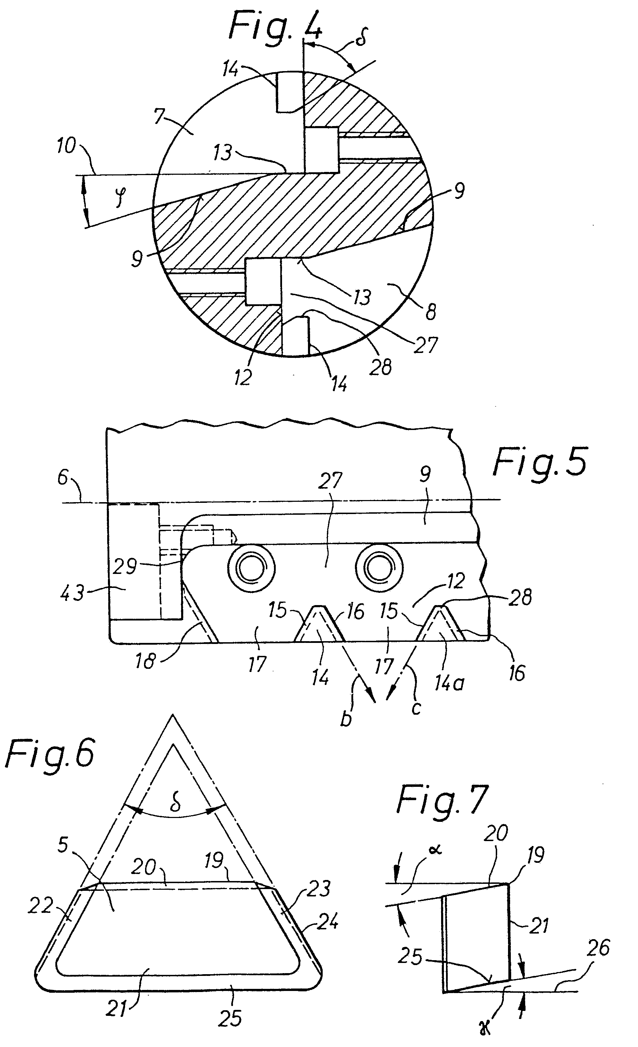

Der Messerkopf nach dem Ausführungsbeispiel der Erfindung weist den Messerkopfkörper 1 auf, dessen walzenförmiger Schaftteil 2 die Schneidplatten 5 trägt und dessen konischer Abschnitt 4 zur Aufnahme des Messerkopfes an der Fräsmaschine dient. Der Messerkopfkörper weist in dargestelltem Beispiel, wie insbesondere Fig. 2 und 4 erkennen lassen, zwei sich in bezug auf die Längsachse 6 des Messerkopfes diametral gegenüberliegende Spanräume 7, 8 auf, die gleichartig ausgebildet sind und von einer Wand 9 begrenzt werden, die in einem Winkel $\varphi$ zu einer Ebene 10 verläuft, die parallel zu einer Radialebene gerichtet ist. Die Spanräume 7, 8 erstrecken sich annähernd über die Länge des walzenförmigen Werkzeugträgerteils 2 und sind, wie Fig. 1 erkennen läßt, in Längsrichtung des Messerkopfes gegeneinander versetzt. Das Maß des Versatzes entspricht der Hälfte der Breite einer unten noch näher zu beschreibenden Schneidplatte 5 bzw. deren Klemmstück 30. Der Versatz ist in Fig. 1 mit a bezeichnet.

Die Spanräume 7 und 8 sind gleichartig von einer einen Boden darstellenden Stützwand 12 begrenzt, die in einer ebenfalls parallel zu einer Radialebene gelegenen Ebene 11 verläuft. Die Wand 9 des Spanraumes geht hierbei in eine zur Stützwand 12 rechtwinklige weitere Wand 13 über. — Von der Stützwand 12 der Spanräume 7, 8 erheben sich in gleichmäßigem Abstand voneinander dreieckige Stützkörper 14, deren Seitenwände sowohl in Richtung der Pfeile b und c (Fig. 5) gegeneinander geneigt sind, wie auch gegen die Stützwand 12 eine Neigung besitzen. Die beiden sich gegenüberliegenden Dreieckskörper 14 und 14a nach Fig. 5 lassen hierdurch zwischen sich eine Ausnehmung 17 entstehen, deren Seitenwände 15, 16 der Ausnehmung einen schwalbenschwanzförmigen gegen den Boden der Ausnehmung sich erweiternden Querschnitt einerseits, wie auch einen sich nach außen in Richtung der Pfeile b und c verjüngenden Querschnitt verleihen. Jeweils eine gleiche Ausnehmung 17 wird zwischen einem dreieckigen Stützkörper 14 und der auf gleicher Höhe gelegenen Seitenwand 18 gebildet, die ebenfalls gegen den Umfang des Teils 2 geneigt und gegen die Stützwand 12 schräg verläuft. Damit besteht die Möglichkeit, wie in Fig. 1 wiedergegeben, z. B. drei Schneidplatten auf gleicher Höhe nebeneinander in die Ausnehmungen 17 einzusetzen und diese durch die Seitenwände 15, 16 bzw. 18 in ihrer Lage zu halten. Hierzu besitzen die Schneidplatten eine Schneidkante 19 sowie die Freifläche 20 und die Spanfläche 21, die in Fig. 1 bei den in ausgezogener Linie dargestellten Schneidplatten und in Fig. 6 dem Beschauer zugekehrt ist. Den in zwei Richtungen abgeschrägten Seitenflächen 15, 16 bzw. 18 der Ausnehmungen 17 entsprechen die gleichartigen Schrägflächen 22, 23 der Schneidplatte 5, deren der Stützwand 12 zugekehrte Kante bei 24 gebrochen sein kann. — Der Freiwinkel $\alpha$ kann gemäß Fig. 7, 8 bis 14° betragen, ebenso wie der Winkel $\varkappa$ zwischen der Vorschubabstützfläche 25 und der Normalen 26 zur Spanfläche 21 8 bis 14° betragen kann. — Der Winkel $\delta$ zwischen den Flächen 15, 16 einerseits und 15, 18 der Ausnehmungen 17 andererseits sowie zwischen den Seitenflächen 21, 22 der Schneidplatte 5 kann 50 bis 70° ausmachen.

Die Ausnehmungen 17 zwischen den dreieckförmigen Stützkörpern 14 bzw. zwischen diesen und der Wand 18 gehen gegen die Wand 9 in eine sich in Axialrichtung über den ganzen Spanraum 7, 8 erstreckende Nut 27 (Fig. 4) über, die gegen die Längsachse 6 des Werkzeuges von der Wand 13 begrenzt wird, während sie ihre vordere Begrenzung an den Enden 18 der dreieckförmigen Körper 14 finden. Die seitliche Begrenzung erfährt die Nut durch die beidseitigen Enden 29 der Spannut. In dieser Nut 27 ist auf Höhe jeder Schneidplatte 5 ein Klemmstück 30 vorgesehen, das mit einer abgeschrägten Vorderseite 31 versehen ist, der der Abschrägung 25 an der Schneidplatte 5 entspricht. Die Neigung der Schrägflächen 25, 31 wird derart gewählt, daß bei Anziehen des Klemmstückes 30 in Richtung des Pfeiles 33 in Fig. 2 ein Druck auf die Schneidplatte 5 in Richtung des Pfeiles 34 ausgeübt wird und damit dieses mit seinen Schrägflächen 22, 23 gegen die in zweifacher Richtung geneigten Wände 15, 16 der Stützkörper 14 bzw. gegen die Wände 18 gedrückt werden. Bei Ausübung dieses Druckes wird die Schneidplatte einerseits gegen den Boden 12 der Ausnehmung 17 gedrückt, andererseits erhält sie eine innige Anlage an den genannten Seitenwänden derart, daß selbst bei Auftreten hoher Fliehkräfte ein genauer Sitz der Schneidplatte garantiert ist. Insbesondere Fig. 5 läßt deutlich einen weiteren Vorteil des erfindungsgemäßen Messerkopfes dahingehend erkennen, daß die Werkzeuge sehr dicht nebeneinander angeordnet werden können, d. h. daß die Stützkörper 14 klein ausgebildet werden können, da die auf ihre Seitenwände 15, 16 ausgeübten Kräfte sich teilweise gegenseitig aufheben und lediglich die Seitenwand 18 die Hälfte der Rückdrückkraft eines Werkzeuges aufzunehmen hat. Es genügen daher relativ kurze abgeschrägte Wände 15, 16 der dreieckigen Stützkörper 14.

Die Klemmstücke 30 besitzen einen zylinderförmigen Ansatz 35, der in eine entsprechende zylindrische Bohrung 36 des Messerkopfkörpers 1 hineinragt. Hierdurch erhält das Klemmstück 30 eine radiale Halterung und Führung, so daß die auf die Schneidplatte 5 auszuübende Kraft wie auch die auftretende Fliehkraft nicht alleine von der mit gegenläufigen Gewinden 37, 38 versehenen Klemmstückschrauben 39 aufzunehmen ist, die in dem entsprechenden Innengewinde des Klemmstückes 30 bzw. dessen zylindrischen Ansatzes 35 und in dem gegenläufigen Innengewinde 40 im Messerkopfkörper einschraubbar ist.

Auf Höhe der mit I bezeichneten Werkzeugreihe ist ein Stirnwerkzeug 41 vorgesehen, das durch ein Klemmstück 42 in einem verstärkten rippenartigen Teil 43 gehalten ist. — Da die beiden Schneidplattenreihen I und II gegeneinander um das Maß a versetzt sind, ergibt sich auf Höhe der Schneidplattenreihe II nur eine gegenüber der Rippe 43 schmalere Rippe 54 an der Stirnseite des Messerkopfes.

Wie Fig. 2 erkennen läßt, kann die Rückwand 45 des Klemmstückes 30 gegen die Wand 13 der sich über die Länge des Spanraumes erstreckenden Nut 27 anlegen.

**Patentansprüche:**

1. Messerkopf zum Walzenfräsen mit durch Fliehkraft gegen Ausnehmungswände des Messerkopfkörpers anpreßbaren Schneidplatten (5), die in Ausnehmungen (17) des Messerkopfkörpers (1) mit radial nach außen gegeneinander gerichteten Wänden (15, 16, 18) und mit schwalbenschwanzförmigem Querschnitt angeordnet und durch je ein Klemmstück (30) gehalten sind, das jeweils an der der Freifläche (20) der Schneidplatten (5) gegenüberliegenden Schrägfläche (31) anliegt, dadurch gekennzeichnet, daß die Ausnehmungen (17) des Messerkopfkörpers (1) einen gegen einen Spanraum (7, 8) im Messerkopfkörper (1) sich verjüngenden Querschnitt aufweisen und das Klemmstück (30) senkrecht zur Schneidplattenebene verstellbar ist.

2. Messerkopf nach Anspruch 1, dadurch gekennzeichnet, daß die zu mehreren in einer gemeinsamen Radialebene (I, II) nebeneinander angeordneten Schneidplatten (5) gleichartig sind und mit ihren Schneidkanten (19) in einer gemeinsamen Tangentialebene gelegen sind.

3. Messerkopf nach Anspruch 1 und 2, dadurch gekennzeichnet, daß die eine Reihe (I, II) bildenden Schneidplatten (5) einer Radialebene gegen die Schneidplatten (5) einer zweiten oder dritten Radialebene axial längsversetzt sind.

4. Messerkopf nach Anspruch 1 bis 3, dadurch gekennzeichnet, daß der im Querschnitt etwa rechtwinklige Spanraum (7, 8) sich in Drehrichtung des Messerkopfes vor der Werkzeugreihe

(I, II) und in einer gemeinsamen Radialebene über alle Schneidplatten (5) dieser Radialebene erstreckt.

5. Messerkopf nach Anspruch 1 bis 4, dadurch gekennzeichnet, daß die gegen die Stützfläche (12) des Messerkopfkörpers (1) sich erweiternde Ausnehmung (17) sich radial einwärts verbreitet und in die Stützfläche einer sich axial über die Gesamtlänge aller Schneidplatten (5) einer Radialebene erstreckende Nut (27) übergeht.

6. Messerkopf nach Anspruch 1 und einem oder mehreren der Ansprüche 2 bis 5, dadurch gekennzeichnet, daß die Spanflächen (21) und die Stützfläche der Schneidplatten (5) parallel zur Radialebene des Messerkopfkörpers (1) verlaufen, und die Freiflächen (20) sowie die geneigten Seitenflächen (22, 23) mit mindestens einer ihrer Nachbarflächen einen Winkel von 8—14° bilden.

7. Messerkopf nach Anspruch 1 und einem oder mehreren der Ansprüche 1 bis 6, dadurch gekennzeichnet, daß jeweils die beiden Seitenflächen (22, 23) der Schneidplatten (5) und die Wände (15, 16, 18) der Ausnehmungen (17) einen Winkel von 50—70° einschließen.

8. Messerkopf nach Anspruch 1 bis 7, dadurch gekennzeichnet, daß die eine Seitenlängskante (31) des rechteckigen Klemmstücks (30) mit einer Anschrägung versehen ist und das Klemmstück (30) einen in eine zylindrische Ausnehmung (36) des Messerkopfkörpers (1) ragenden Hohlgewindezapfen (35) trägt.

9. Messerkopf nach Anspruch 8, dadurch gekennzeichnet, daß in den Hohlgewindezapfen (35) und in ein koaxiales Gegengewinde in dem Fräserkopfkörper eine senkrecht zur Radialebene der Schneidplatten (5) gelegene Schraube (39) mit gegenläufigen Gewinden (37, 38) einschraubbar ist.

10. Messerkopf nach Anspruch 1 und einem oder mehreren der Ansprüche 2 bis 9, dadurch gekennzeichnet, daß die für alle gleichartigen Spanräume (7, 8) einer Radialebene (I, II) gemeinsame Begrenzungswand (9) parallel zur Mittelachse (6) des Messerkopfkörpers (1) verläuft.

11. Messerkopf nach Anspruch 1 und einem oder mehreren der Ansprüche 2 bis 10, dadurch gekennzeichnet, daß die Schneidplatten (5) der Radialebenen (I, II) gleich sind, rhombischen, sechs- oder achteckigen Umfang und eine achsparallele Schneidkante und eine ebensolche der Freifläche (20) gegenüberliegende Schrägfläche (31) als rückseitige Fläche aufweisen.

## Claims

1. An insert type plain milling cutter with inserts (5) designed to be kept in position against the walls of the pockets in the body of the cullter by centrifugal force, said inserts being placed in the pockets (17) of the body (1) of the milling cutter with walls (15, 16 and 18) running radially outwards so as to be opposite to each other and with a dove-tail cross section, each insert being kept in place by its own gripping piece (30), that is in each case rested on the sloping face (31) opposite to the face (20) of the inserts (5), characterized in that the pockets (17) of the body (1) of the milling cutter have a cross section becoming narrower towards a swarf space (7 and 8) in the body (1) of the milling cutter, and the gripping piece (30) may be adjusted in a direction normal to the plane of the insert.

2. The milling cutter as claimes in claim 1 characterized in that the inserts (5) placed side by side in a group in a common radial plane (I and II) are the same as each other and have their cutting edges (19) placed in a common tangential plane.

3. The milling cutter as claimed in claims 1 and 2 characterized in that the inserts (5) forming one row (I and II) of one radial plane are out of line with the inserts (5) of a second or third radial plane lengthways in the axial direction.

4. The milling cutter as claimed in claims 1 to 3 characterized in that the swarf space (7 and 8) that is generally rectangular in cross section is placed in front of the row of tools (I and II) in the direction of turning and in a common radial plane over all the inserts (5) of this radial plane.

5. The milling cutter as claimed in claims 1 to 4 characterized by a pocket (17) that becomes wider towards the support face (12) of the body (1) of the milling cutter and becomes broader in a radially inward direction, the pocket (12) turning into the support face of a groove (27) running axially over the overall length of all the inserts (5) in a radial plane.

6. The milling cutter as claimed in claim 1 and one or more of the claims 2 to 5 characterized in that the faces (21) and the support face of the inserts (5) are parallel to the radial plane of the body (1) of the milling cutter and the end faces (20) together with the sloping side faces (22 and 23) are at an angle of at least 8 to 14° to at least one auf the faces next to them.

7. The milling cutter as claimed in claim 1 and one or more of the claims 1 to 6 characterized in that in each case the two side faces (22 and 23) of the inserts (5) and the walls (15, 16 and 18) of the said pockets (17) make and angle of 50 to 70° to each other.

8. The milling cutter as claimed in claims 1 to 7 characterized in that the one side edge (31) running in the length direction, of the right angled gripping piece (30) has an angled face and the gripping piece (30) has a hollow threaded pin (35) running into a cylindrical hole (36) in the body (1) of the milling cutter.

9. The milling cutter as claimed in claim 8 characterized by a screw (39) with threads (37 and 38) of opposite hand that may be screwed into the hollow threaded pin (35) and into a coaxial opposite thread in the body of the milling cutter, said screw (39) being normal to the radial plane of the inserts (5).

10. The milling cutter as claimed in claim 1 and one or more the claims 2 to 9 characterized in that the limiting wall (9) that is common to all the like swarf spaces (7 and 8) of a radial plane (I and II) is parallel to the middle axis (6) of the body (1) of the milling cutter.

11. The milling cutter as claimed in claim 1 and one or more of the claims 2 to 10 characterized in that the inserts (5) of the radial planes (I and II) are the same as each other, have a rhombic, hexagonal or octagonal form, have a cutting edge parallel to the axis and as a back face have a sloping face (31) that is parallel to the axis and is opposite to the end face (20).

### Revendications

1. Tête porte-lame de fraisage de profil comportant des plaques coupantes (5) qui, pouvant être appliquées par la force centrifuge contre des parois d'évidements du corps de la tête porte-lame, sont montées dans des évidements (17) du corps (1) de la tête porte-lame dont les parois (15, 16, 18) se rapprochent les unes des autres en allant vers l'extérieur dans le sens radial et dont la section est en forme de queue d'aronde et sont maintenues chacune par une pièce de serrage (30) qui s'applique contre la surface oblique (31) opposée à la surface libre (20) des plaques coupantes (5), caractérisée en ce que les évidements (17) ménagés dans le corps (1) de la tête porte-lame ont une section qui diminue en allant vers une cavité à copeaux (7, 8) ménagée dans le corps (1) de la tête porte-lame et en ce que la pièce de serrage (30) peut se déplacer dans une direction perpendiculaire au plan des plaques coupantes.

2. Tête porte-lame selon la revendication 1, caractérisée en ce que plusieurs plaques coupantes (5) montées les unes à côté des autres dans un plan radial commun (I, II) sont toutes pareilles et sont disposées de manière que leurs bords coupants (19) soient dans un plan tangent commun.

3. Tête porte-lame selon l'une des revendications 1 et 2, caractérisée en ce que les plaques coupantes (5) formant une rangée (I, II), plaques situées dans un plan radial, sont décalées dans le sens longitudinal par rapport aux plaques coupantes (5) situées dans un deuxième ou un troisième plan radial.

4. Tête porte-lame selon l'une des revendications 1 à 3, caractérisée en ce que la cavité à copeaux (7, 8), de section à peu près rectangulaire, s'étend, dans le sens de rotation de la tête porte-lame, devant la rangée d'outils (I, II) et

dans un plan radial commun le long de toutes les plaques coupantes (5) de ce plan radial.

5. Tête porte-lame selon l'une des revendications 1 à 4, caractérisée en ce que l'évidement (17) qui s'élargit en allant vers la surface d'appui (12) du corps (1) de la tête porte-lame s'élargit dans le sens radial et se raccorde à la surface d'appui d'une rainure (27) qui s'étend dans le sens axial sur toute la longueur de toutes les plaques coupantes (5) d'un plan radial.

6. Tête porte-lame selon la revendication 1 et l'une ou plusieurs des revendications 2 à 5, caractérisée en ce que les surface à copeaux (21) et la surface d'appui des plaques coupantes (5) sont parallèles au plan radial du corps (1) de la tête porte-lame et en ce que les surfaces libres (20) et les surfaces latérales inclinées (22, 23) forment avec l'une au moins des surfaces qui leur sont voisines un angle de 8 à 14°.

7. Tête porte-lame selon la revendication 1 et l'une ou plusieurs des revendications 1 à 6, caractérisée en ce que chacune des deux surfaces latérales (22, 23) des plaques coupantes (5) et les parois (15, 16, 18) des évidements (17) forment un angle de 50 à 70°.

8. Tête porte-lame selon l'une des revendications 1 à 7, caractérisée en ce que l'un des bords latéraux longitudinaux (31) de la pièce de serrage rectangulaire (30) comporte une partie oblique et en ce que la pièce de serrage (30) porte un tenon taraudé (35) pénétrant dans un évidement cylindrique (36) du corps (1) de la tête porte-lame.

9. Tête porte-lame selon la revendication 8, caractérisée en ce que dans le tenon taraudé (35) et dans un contre-taraudage coaxial ménagé dans le corps de la tête de fraisage on peut introduire en la vissant une vis (39) à filetages opposés (37, 38) orientée perpendiculairement au plan radial des plaques coupantes (5).

10. Tête porte-lame selon la revendication 1 et l'une des revendications 2 à 9, caractérisée en ce que la paroi (9) commune délimitant toutes les cavités à copeaux (7, 8) identiques d'un plan radial (I, II) est parallèle à l'axe médian (6) du corps (1) de la tête porte-lame.

11. Tête porte-lame selon la revendication 1 et l'une des revendications 2 à 10, caractérisée en ce que les plaques coupantes (5) des plans radiaux (I, II) sont pareilles et ont un contour en losange, en hexagone ou en octogone et comportent, comme surface d'appui arrière, un bord coupant parallèle à l'axe et une surface oblique (31) analogue opposée à la surface libre (20).

## Fig.1

## Fig. 2

## Fig.3

0 029 981

Fig. 4

Fig.5

Fig.6

Fig.7